# EUROPEAN PATENT SPECIFICATION

(11) **EP 0 444 047 B1**
(45) Date of publication and mention of the grant of the patent: **25.01.1995**
(21) Application number: 89910689.2
(22) Date of filing: 20.09.1989
(51) Int. Cl.: B23D 19/06, B23D 35/00

(54) **AN IMPROVED SLITTER**
SCHNEIDVORRICHTUNG
REFENDEUSE AMELIOREE

(30) Priority: 21.09.1988 SE 8803349
(43) Date of publication of application: 04.09.1991
(73) Proprietor: AKV-ORTIC AB, S-714 00 Kopparberg (SE)
(72) Inventor: SAARINEN, Kari, S-714 00 Kopparberg (SE)
(74) Representative: Brinck, Curt Edvard
(86) International application number: SE8900506
(87) International publication number: WO9003240

(56) References cited:
- DE-A- 1 527 077
- PATENT ABSTRACTS OF JAPAN, vol. 8, no. 120 (M-300), abstract of JP 59-24910, publ. 1984-02-08 (MITSUBISHI JUKOGYO K.K.)
- Derwent's Abstract no. 86-86 525/13, SU 1 177 083, publ. Week 8613 (AZOV FORGE PRESS EQUIPMENT)

## Description

This invention relates to a slitter for steel strips comprising two parallel arbors extending between the frame portions and journaled therein, sets of cutters and spacers on each arbor, one of the frame portions comprising driving means for rotating the arbors, the opposite frame portion being movable to permit said sets to be mounted and dismounted.

Such a slitter is described in US-A-4183273. Each set of cutters and spacers is clamped together as a unit by a lock nut on the arbor.

It is an object of the invention to make the exchange of sets of cutters and spacers simpler and faster and it is also an object to ensure that there is a positive force holding a set together during the entire slitting operation also if the arbors and the sets will have different thermal expansion during the slitting operation.

To these ends, the movable frame portion is outwardly pivotable around a vertical shaft to lay the adjacent ends of the arbors free, the sets are axially lockable between a stationary ring on the driving end of the arbors and a movable thrust ring on the other end, transversely movable means in the arbors are outwardly movable from withdrawn positions, in which they permit the sets to pass them, through the arbors to actuate the thrust ring to axially clamp the sets against the stationary ring, axially movable means in the arbors are arranged to actuate said transversely movable means and the movable frame portion comprises hydraulic piston means arranged to engage with said axially movable means and to move them axially thereby to clamp and release said sets.

Preferably, the axially movable means in each arbor is arranged to force the transversely movable means transversely outwardly when being pulled by the hydraulic piston means since the movable frame will then be forced against the arbor to provide for a lash-free connection simultaneously with the set of cutters and spacers being forced together.

The invention will be disclosed in more details below with reference had to the accompanying drawings.
Fig. 1 is a diagramatical end view of one embodiment of a slitter, picked as an example, having a locking means according to the invention for each one of the cutter arbors, intended to show the environment in which the locking means according to the invention is intended to be used;
Fig. 2 is a plan view from above of the slitter, corresponding to fig. 1;
Fig. 2A illustrates a detail;
Fig. 3 is an axial longitudinal section showing the end of the cutter arbor, having a locking means according to the invention, wherein the locking means is shown in two different positions.

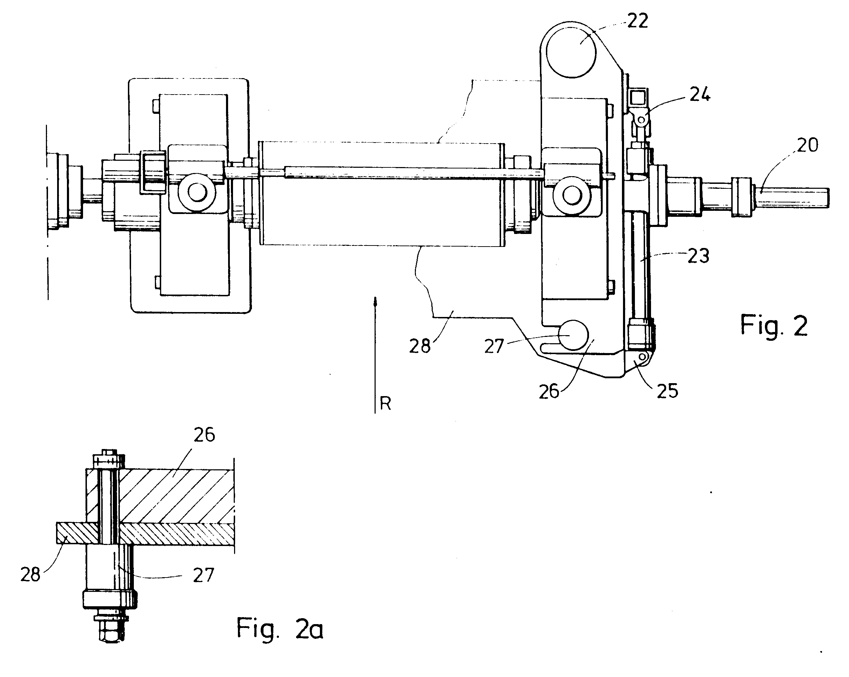

In the drawings there is shown, in end view, a part of a strip slitter comprising two frame portions 10, 11 between which there are rotatably journalled two arbors 12, 13, on which there are threaded a plurality of mutually co-operating disc shaped cutters with intervening spacers. The arbors and the drives therefore are known per se and do not need any detailed description. The material is intended to pass through the slitter in the direction of the arrow R in fig. 2.

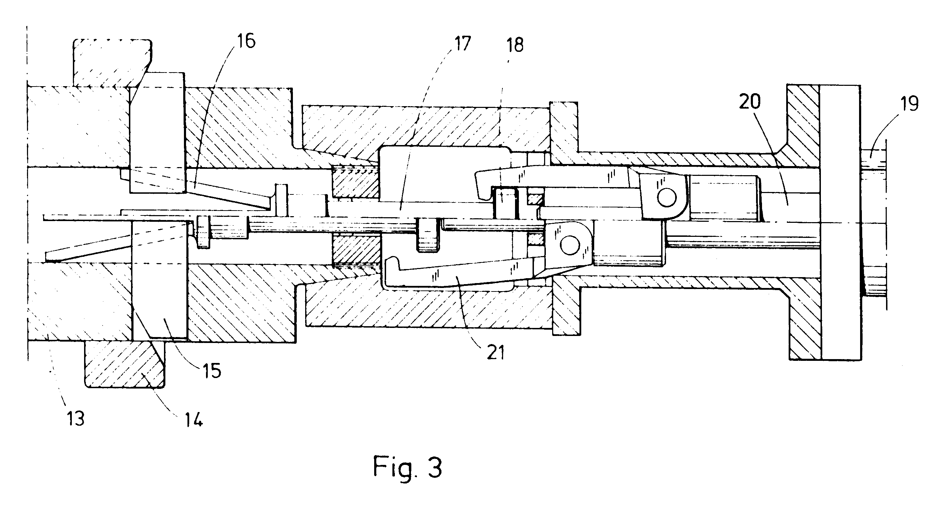

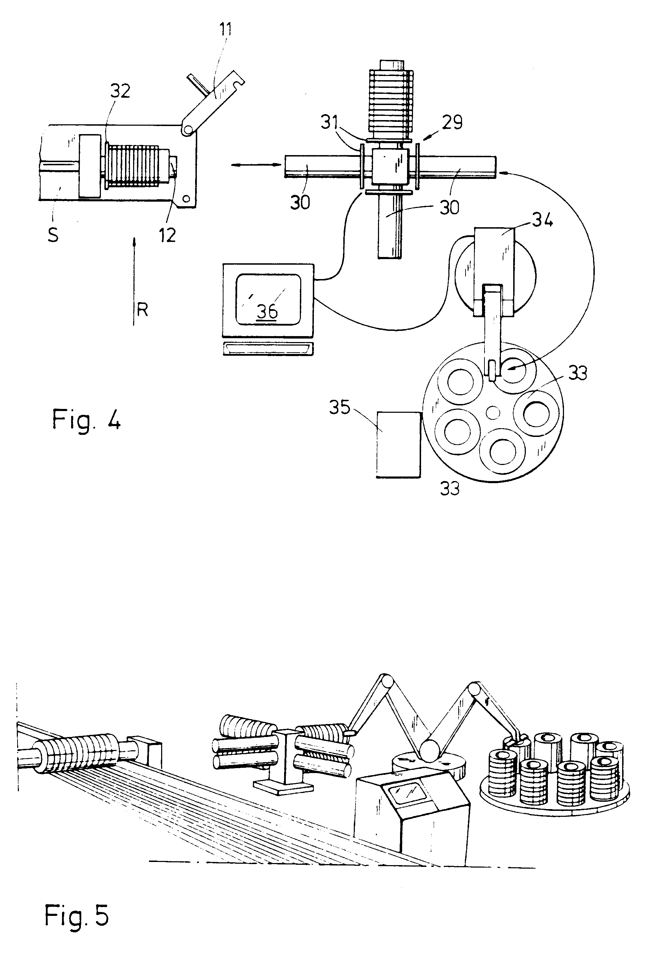

According to fig. 3 there is disposed on the arbor 13 a thrust ring 14, which is axially movable by means of pistons 15, each one of which has an inclined surface which is adapted to co-operate with a corresponding inclined surface on the thrust ring 14. The pistons 15 are radially movable in relation to the arbor 13 in that they, by means of keygrooves or the like, are interconnected with axially movable keys 16, which are adapted to be axially displaced by displacing a thrust rod 17. At its right hand end this rod has a head 18. The head 18 is displaceable leftwardly by means of a rod 20 that is movable by means of a hydraulic piston 19, and the rod 20 has pivotable hooks 21 which may engage behind the head 18 and pull the head outwardly, towards the right, when the pistons 15 are to be displaced outwardly to axially lock the cutters and spacers on the arbor 13.

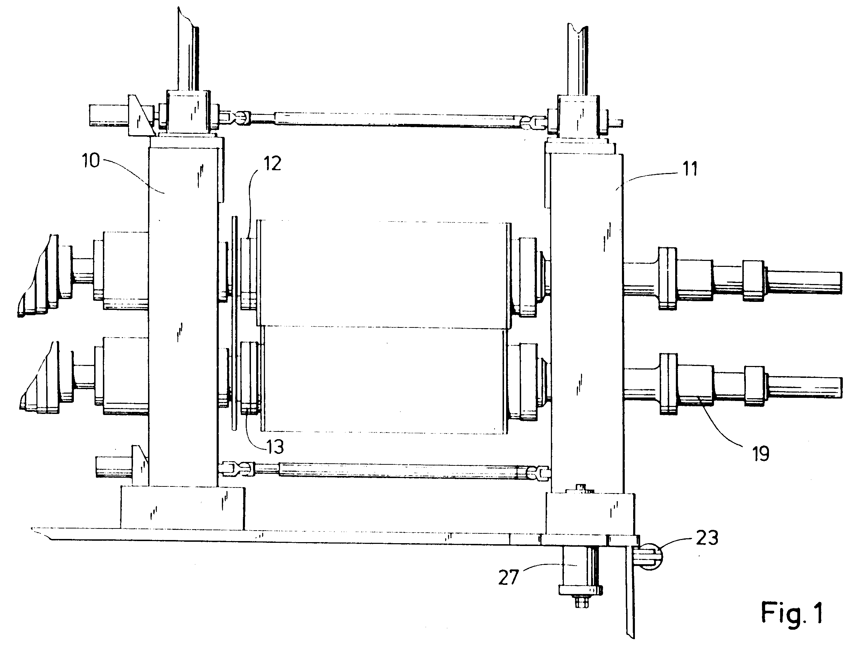

Portions of the right frame wall 11 are outwardly pivotable around a vertical shaft 22, viz. by means of a hydraulic cylinder 23, one end of which is pivotally connected to a bracket 24 on the frame, and the other end of which is pivotally connected to a stationary bracket 25 on the slitter frame, fig. 1 and 2. The just mentioned pivotable frame wall portions have a locking lug 26 which, by means of a hydraulic piston 27, may be locked to a frame portion 28 to lock the end wall in operative position. A corresponding locking means is disposed at the other end of the frame.

## Claims

1. A slitter for steel strips,
comprising two frame portions (10,11),
two parallel arbors (12,13) extending between the frame portions and journaled therein,
sets of cutters and spacers on each arbor,
one of the frame portions (10) comprising driving means for rotating the arbors,
the opposite frame portion (11) being movable to permit said sets to be mounted and dismounted,
**characterized in that**
the movable frame portion (11) is outwardly pivotable around a vertical shaft (22) to lay the adjacent ends of the arbors (12,13) free,
the sets are axially lockable between a stationary ring on the driving end of the arbors (12,13) and a movable thrust ring (14) on the other end,
transversely movable means (15) in the arbors (12,13) are outwardly movable from withdrawn positions, in which they permit the sets to pass them, through the arbors to actuate the thrust (14) ring to axially clamp the sets against the stationary ring,
axially movable means (16,17) in the arbors are arranged to actuate said transversely movable means (15)
and the movable frame portion (11) comprises hydraulic piston means (19,20) arranged to engage with said axially movable means (16,17) and to move them axially thereby to clamp and release said sets.

2. A slitter according to claim 1,
**characterized in that**,
in each arbor (12;13), said axially movable means (16,17) is arranged to force said transversely movable means (15) outwardly when being pulled by said hydraulic piston means (19,20).

3. A slitter according to claim 2,
**characterized in that**
pivotable hooks (21) coupled to the hydraulic piston means (19,20) are arranged to engage with the axially movable means (16,17) when the hydraulic piston moves outwardly and to disengage when the hydraulic piston moves inwardly.

4. A slitter according to anyone of the preceding claims,
**characterized in that**,
in each arbor (12,13), the transversely movable mean (15) comprises pistons, sliding in bores in the arbor.

5. A slitter according to claim 4,
**characterized in that**
said pistons (15) sliding in bores have inclined surfaces engaged with an inclined surface on the thrust ring (14).

## Patentansprüche

1. Rollschere für Stahlbänder, die aufweist:
zwei Rahmenabschnitte (10, 11),
zwei parallele Wellen (12, 13), die sich zwischen den Rahmenabschnitten erstrecken und in diesen gelagert sind,
Gruppen von Schneidwerkzeugen und Abstandhaltern auf jeder Welle,
wobei einer der Rahmenabschnitte (10) eine Antriebseinrichtung zum Drehen der Wellen aufweist,
wobei der entgegengesetztliegende Rahmenabschnitt (11) bewegbar ist, um den Gruppen zu gestatten, montiert und demontiert zu werden,
dadurch gekennzeichnet, daß
der bewegbare Rahmenabschnitt (11) um eine vertikale Welle (22) nach außen drehbar ist, um die benachbarten Enden der Wellen (12, 13) freizulegen,
die Gruppen zwischen einem stationärem Ring am Antriebsende der Wellen (12, 13) und einem bewegbaren Druckring (14) am anderen Ende axial verriegelbar sind,
in Querrichtung bewegbare Einrichtungen (15) in den Wellen (12, 13) von zurückgezogenen Positionen, in denen diese den Gruppen gestatten, diese zu passieren, durch die Wellen nach außen bewegbar sind, um zum axialen Festklemmen der Gruppen gegen den stationären Ring den Druckring (14) zu betätigen,
axial bewegbare Einrichtungen (16, 17) in den Wellen angeordnet sind, um die in Querrichtung bewegbaren Einrichtungen (15) zu betätigen, und
der bewegbare Rahmenabschnitt (11) hydraulische Kolbeneinrichtungen (19, 20) aufweist, die angeordnet sind, um mit den axial bewegbaren Einrichtungen (16, 17) in Eingriff zu stehen und um diese axial zu bewegen, um dadurch die Gruppen festzuklemmen und freizugeben.

2. Rollschere nach Anspruch 1, dadurch gekennzeichnet, daß
die axial bewegbare Einrichtung (16, 17) in jeder Welle (12; 13) angeordnet ist, um die in Querrichtung bewegbare Einrichtung (15) nach außen zu drücken, wenn diese durch die hydraulische Kolbeneinrichtung (19, 20) gezogen wird.

3. Rollschere nach Anspruch 2, dadurch gekennzeichnet, daß
drehbare Haken (21), die mit der hydraulischen Kolbeneinrichtung (19, 20) gekoppelt sind, angeordnet sind, um mit der axial bewegbaren Einrichtung (16, 17) in Eingriff zu stehen, wenn sich der hydraulische Kolben nach außen bewegt, und außer Eingriff zu stehen, wenn sich der hydraulische Kolben nach innen bewegt.

4. Rollschere nach einem der vorhergehenden Ansprüche, dadurch gekennzeichnet, daß
die in Querrichtung bewegbare Einrichtung (15) in jeder Welle (12, 13) Kolben aufweist, die in Bohrungen in der Welle gleiten.

5. Rollschere nach Anspruch 4, dadurch gekennzeichnet, daß
die Kolben (15), die in den Bohrungen gleiten, geneigte Fläche haben, die mit einer geneigten Fläche am Druckring (14) in Eingriff stehen.

## Revendications

1. Découpeuse pour rubans d'acier, comprenant deux parties de cadre (10, 11), deux mandrins parallèles (12, 13) s'étendant entre les parties de cadre et soutenus dans celles-ci par des paliers, des jeux de couteaux et de bagues d'espacement sur chaque mandrin, une des parties de cadre (10) comprenant des moyens d'entraînement pour faire tourner les mandrins, la partie de cadre opposée (11) étant mobile pour permettre le montage et le démontage desdits jeux, caractérisée en ce que la partie de cadre mobile (11) peut pivoter vers l'extérieur autour d'un arbre vertical (22) pour rendre libres les extrémités adjacentes des mandrins (12, 13), les jeux peuvent être bloqués axialement entre une bague immobile sur l'extrémité d'entraînement des mandrins (12, 13) et une bague de butée mobile (14) sur l'autre extrémité, des moyens (15) mobiles transversalement dans les mandrins (12, 13) sont mobiles vers l'extérieur en partant des positions retirées, dans lesquelles ils permettent le passage des jeux, à travers les mandrins pour pousser la bague de butée (14) afin de serrer axialement les jeux contre la bague immobile, des moyens mobiles axialement (16, 17) dans les mandrins sont agencés pour actionner lesdits moyens (15) mobiles transversalement et la partie de cadre mobile (11) comprend des moyens de piston hydraulique (19, 20) agencés pour s'engager avec lesdits moyens axialement mobiles (16, 17) et pour les déplacer axialement afin de serrer et libérer de cette façon lesdits jeux.

2. Découpeuse selon la revendication 1, caractérisée en ce que, dans chaque arbre (12, 13), ledit moyen mobile axialement (16, 17) est agencé pour obliger ledit moyen (15) mobile transversalement à se déplacer vers l'extérieur lorsqu'il est poussé par ledit moyen de piston hydraulique (19, 20).

3. Découpeuse selon la revendication 2, caractérisée en ce que les griffes pivotantes (21) coupées au moyen de piston hydraulique (19, 20) sont agencées pour s'engager avec ledit moyen mobile axialement (16, 17) lorsque le piston hydraulique se déplace vers l'extérieur et pour se désengager lorsque le piston hydraulique se déplace vers l'intérieur.

4. Découpeuse selon une quelconque des revendications précédentes, caractérisée en ce que, dans chaque arbre (12, 13), le moyen (15) mobile transversalement comprend des pistons, coulissant dans des alésages dans le mandrin.

5. Découpeuse selon la revendication 4, caractérisée en ce que lesdits pistons (15) coulissant dans des alésages ont une surface inclinée engagées avec une surface inclinée sur la bague de butée (14).
